# EUROPÄISCHE PATENTANMELDUNG

(11) **EP 1 345 466 A1**
(43) Veröffentlichungstag der Anmeldung: **17.09.2003**
(21) Anmeldenummer: 02005563.8
(22) Anmeldetag: 12.03.2002
(51) Int. Cl.: H04Q 11/04

(54) **Verfahren und Einrichtung zur Durchführung eines Mehrwertdienstes in einem Kommunikationsnetz**

(71) Anmelder: Siemens AG, 80333 München (DE)
(72) Erfinder: Guan, Qi, Dr., 1210 Wien (AT)
(74) Vertreter: Berg, Peter, Dipl.-Ing.

(57) **Zusammenfassung**

Verfahren zur Durchführung eines frei kalkulierbaren Mehrwertdienstes, der durch eine aktuelle Adressierung für zumindest einen dienstanfordernden Teilnehmer (A) von einer dienstanbietenden Funktion (B) eines Kommunikationsnetzes durch Nachrichtenübermittlung in einem Übertragungskanal (ÜK) abrufbar ist, wobei der Übertragungskanal durch Verbinden aneinandergereihter Teilstrecken (Tn, Tm) gebildet wird und zumindest eine dieser Verbindungen (Vnm) in einer an einen Vermittlungsrechner (VR) angeschlossenen Rückvermittlungseinrichtung (RxD) hergestellt wird.

## Beschreibung

### Bezeichnung der Erfindung

Die Erfindung betrifft ein Verfahren zur Durchführung eines Mehrwertdienstes, der durch eine aktuelle Adressierung für zumindest einen dienstanfordernden Teilnehmer von einer dienstanbietenden Funktion eines Kommunikationsnetzes durch Nachrichtenübermittlung in einem Übertragungskanal abrufbar ist, sowie eine Einrichtung zur Durchführung des Verfahrens.

### Stand der Technik

Ein Kommunikationsnetz verbindet räumlich entfernte Kommunikationsteilnehmer durch eine Aneinanderreihung von Punkt-zu-Punkt Verbindungen, durch sogenannte Teilstrecken. Ein solches Teilstreckennetz ist beispielsweise das Telekommunikationsnetz, auch Public Switched Telephone Network, PSTN, ISDN-Netz, im Folgenden kurz auch als Netz bezeichnet.

In den Verbindungspunkten, den Vermittlungsstellen, stehen Wählsysteme, das sind in der Regel Verbindungsrechner, die während des Verbindungsaufbaus eine Auswahl aus angrenzenden Teilstrecken treffen und abschnittsweise eine Wegwahl im Netz durchführen. Für diese Vermittlungsrechner sind auch die Synonyme Knotenrechner, Verbindungsknoten, Interface Message Processor, oder switch gebräuchlich. Durch die Wegwahl, dem sogenannten Routing, entsteht ein Übertragungsweg, der - sieht man diesen lösgelöst von seiner physikalischen Ausprägung - einen Kommunikations- oder Übertragungskanal darstellt. Der Übertragungskanal verbindet die Kommunikationsteilnehmer. Aus einem Übertragungskanal sind auch Mehrwertdienstleistungen abrufbar. Der Begriff Mehrwertdienst ist in der Literatur nicht scharf umgrenzt. Im folgenden ist darunter jede zusätzlich in einem Netz angebotene Kommunikationsdienstleistung zu verstehen.

Telekommunikationsnetze waren zunächst nur auf eine Dienstleistung, die interpersonelle Kommunikation über große Entfernungen, ausgelegt. Im Laufe der Zeit kam neben dem Fernsprechdienst die Datenübertragung hinzu. Die anfangs getrennten Netze für Sprach- und Datenübertragung wachsen immer mehr zusammen.
Nationale Telekommunikationsnetze sind heute weitgehend digitalisiert. Von Bedeutung ist aufgrund seiner weltweiten Verbreitung insbesondere das dienstintegrierende digitale Netz, ISDN (Integrated Services Digital Network). In diesem Netz wird die Signalisierung für den Auf- und Abbau der Nutzkanalverbindungen getrennt behandelt; Nutz- und Signalisierungswege verlaufen getrennt. Die Steuerung der ISDN-Dienste ist durch das ITU-T-Zeichengabe System Nr. 7 weitgehend standardisiert; Mehrwertdienste werden im Netz durch das Konzept der Intelligenten Netze, abgekürzt IN, realisiert. Die Architektur eines Intelligenten Netzes umfasst mehrere logische Ebenen. Die Steuerung der Dienste ist in speziellen Datenbanken, das sind im wesentlichen IN-Rechner, die auch als Service Control Points (SCP)bezeichnet werden, konzentriert. Die Kapazität einer zentralen Datenbank kann mehr als 100 000 Einträge von Dienstkunden aufweisen. Die zentrale Steuerung dieser eingetragenen Dienste ist aufgrund der getrennten Handhabung von Nutz- und Signalisierungswegen im Netz technisch aufwendig. Von Nachteil ist oft auch, dass der Dienstkunde nicht unmittelbar Zugriff auf die Eintragung in der Datenbank hat.

Ein Mehrwertdienst wird durch eine bestimmte Dienstkennzahl, z.B. eine besondere Vorwahlnummer, aktiviert. Diese Dienstkennzahl aktiviert aber keine Vermittlungsstelle oder Einrichtung am Netz, sondern einen Diensterbringer (Server) im Netz. M.a.W. es wird ein bestimmter Dienst aufgerufen, nicht ein Teilnehmer. Die der Dienstkennzahl folgende Rufnummer wird in einem am Netz angeschalteten IN-Rechner übergeben, dort ausgewertet und die Einstellinformation an das Netz gegeben. Im Netz werden die beiden Kommunikationspartner verbunden. Zum IN-Rechner gelangt immer nur die Signalisierungsinformation. Die Nutzkanäle werden nicht zum IN-Rechner geschaltet.

Ein Mehrwertdienst kann für einen dienstanfordernden Teilnehmer gebührenpflichtig oder entgeltfrei sein. Durch einen Mehrwertdienst kann beispielsweise ein Versandhaus, in der Rolle eines Dienstauftraggebers, unter einer einheitlichen Nummer, z.B. unter der Servicenummer 0800 180x, die Bestelldaten eines dienstanfordernden Teilnehmers entgegennehmen, diese bestätigen und die Bestellung ausführen. Der Dienstauftraggeber, d.h. das Versandhaus, kann die Gesprächskosten, die entweder je Zeiteinheit oder je nach Verbindung berechnet werden, vollständig übernehmen. Im Gegensatz hierzu gibt es aber auch Mehrwertdienste, die dem rufenden Teilnehmer vom Betreiber des Netzes teilweise oder vollständig in Rechnung gestellt werden, wie 0900 200x. Der Netzbetreiber, von dem aus der Dienst angeboten wird, legt in Abstimmung mit dem Anbieter des Dienstes fest, wie hoch das Entgelt für den Dienst ist. Der Preis ist frei kalkulierbar.

Es kann vorkommen, dass der rufende Teilnehmer einen Mehrwertdienst in Anspruch nimmt, sich aber anfangs nicht vollumfänglich über die Höhe der anlaufenden Kosten bewusst ist. Bei der Gebührenabrechnung kann er dann mit tastsächlichen Kosten konfrontiert werden, mit denen er nicht gerechnet hat. In Österreich legt eine Entgeltverordnung (§6 Entgeltverordnung-EVO, Bundesgesetzblatt, Jahrgang 1999, Teil II, 158) den Betreiber eines Netzes eine Informationspflicht auf: Bei Rufen in den Nummerierungsbereich für nationale Rufnummern mit den Bereichskennzahlen 90x, 91x, 92x und 93x muss der Betreiber des Netzes sicherstellen, dass dem Anrufenden die Höhe des pro Minute anfallenden Entgeltes unmittelbar nach Herstellung der Verbindung mitgeteilt wird. Diese Information darf höchstens 10 Sekunden dauern. Es darf dem anrufenden Teilnehmer für diese Information kein Entgelt in Rechnung gestellt werden. Der Netzbetreiber muss sein Netz so einrichten, dass dieser Informationspflicht nachgekommen wird. Einrichtungen zur Gebührenansage eines Mehrwertdienstes sind aber im bestehenden nationalen Telekommunikationsnetz in dieser Weise nicht vorgesehen.

Ein weiterer Aspekt ist, dass 9xx-er Mehrwertdienstnummern frei beantragt werden können. Antragsberechtigt auf Zuteilung sind nicht nur Inhaber von Konzessionen für den Sprachtelefondienst in festen Netzen, auch Anbieter von sogenannten frei kalkulierbaren Mehrwertdiensten sind antragsberechtigt. Die Höhe des Tarifs wird marktorientiert festgelegt; es existiert keine vorgeschriebene Obergrenze.

Die Nachfrage nach Informationen, die durch Mehrwertdienste in einem Telekommunikationsnetz bereitgestellt werden können, kann im Netz unterschiedlich sein und verschiedenen Ursprung haben. Eine spezielle Wettervorhersage für eine Küstenregion wird für Sport- und Freizeitgestaltung in dieser Region eine besondere Bedeutung haben. Die Wahrscheinlichkeit, dass dieses Informationsangebot von Teilnehmern dieser Region genutzt wird ist höher, als die von entfernt liegenden Teilnehmern.

Bei personenbezogenen Dienstleistungen wird oft gewünscht, dass der Anbieter eines Mehrwertdienstes öffentlich nicht in Erscheinung tritt. Anbieter von Partnerbörsen, Erotikinseraten usw. wollen häufig unerkannt bleiben. Beim Telefonmarketing, das von einem privaten Telefonanschlusses durchgeführt wird, soll die weitere Abwicklung des Geschäfts nicht vom Fernsprechteilnehmer, sonder durch das Unternehmen, das er vertritt, abgewickelt werden. Die private Rufnummer soll während des Telefonmarketings nicht weiter gegeben werden.

Für Endteilnehmer eines Telekommunikationsnetzes, die oft nur einen analogen Anschluss zum Netz haben, ist es schwer möglich einen Mehrwertdienst anzubieten.
Um Anbieter eines Mehrwertdienstes im Netz zu werden, muss ihre Teilnehmerendeinrichtung in der Lage sein, Dienstparameter an IN-Rechner des Intelligenten Netzes übermittelt zu können sowie binnen 10 Sekunden eine Gebührenansage durchführen zu können. Für diese Endteilnehmer ist der Zugang zum Dienstleistungsanbieter erschwert, da eine Änderung der Anschlusstechnologie erforderlich ist.

### Darstellung der Erfindung

Aufgabe der Erfindung ist es, ein Verfahren und eine Einrichtung so anzugeben, dass ein frei kalkulierbarer Mehrwertdienst in einem Kommunikationsnetz möglichst einfach und mit geringen Kosten realisiert werden kann.

Diese Aufgabe wird durch ein Verfahren gemäß den Merkmalen des Patentanspruchs 1 und durch Einrichtungen gemäß den Merkmalen des Patentanspruchs 9 und des Patentanspruchs 13 gelöst.

Erfindungsgemäß wird bei der Durchführung eines frei kalkulierbaren Mehrwertdienstes, der durch eine aktuelle Adressierung für zumindest einen dienstanfordernden Teilnehmer von einer dienstanbietenden Funktion eines Kommunikationsnetzes durch Nachrichtenübermittlung in einem Übertragungskanal abrufbar ist, der Übertragungskanal durch Verbinden aneinandergereihter Teilstrecken gebildet. Zumindest eine dieser Verbindungen wird nicht in einem Vermittlungsrechner, sondern in einer vergleichsweise technisch einfachen Zusatzeinrichtung, der Rückvermittlungseinrichtung, hergestellt. Diese ist durch ISDN-Leitungen an den Vermittlungsrechner angeschlossen. Sowohl die Nutzkanalverbindung zwischen den Kommunikationspartnern, als auch die Signalisierung des Übertragungsweges erfolgt über diese Zusatzeinrichtung. Der Vorteil ist eine einfache Dienststeuerung. Eine komplexe Netzarchitektur für die Bereitstellung des Dienstes ist nicht erforderlich. Verglichen mit zentralen IN-Datenbanken ist der technische Aufwand für die Realisierung eines Mehrwertdienstes in einem vorhandenen Netz geringer und besser auf die Nachfrage der Kunden anpassbar. Bei einer Netzneukonzeption oder einer Netzerweiterung ermöglichen die vergleichsweise kleinen, dezentralen Rückvermittlungseinheiten, eine effiziente Integration des Mehrwertdienstes. Die Anschlusstechnologie, mit der Dienstleister und dienstanfordernde Teilnehmer am Netz angeschlossen sind, kann beibehalten werden. Dies erleichtert den Zugang für Dienstleister. Das Erbringen einer Mehrwertdienstleistung ist vom Betreiber eines Telekommunikationsnetzes weitgehend abgekoppelt. Die Privatsphäre eines Anbieters bleibt geschützt, da die Rückvermittlungseinrichtung die Rufnummer des dienstbereitstellenden Teilnehmers nicht weiter reicht.

Diese vorteilhafte Abkopplung wird dadurch erreicht, dass die Nachrichtenübermittlung über eine Verbindung verläuft, die durch die Rückvermittlungseinrichtung hergestellt wird. Das Durchschalten von Nutzkanalverbindungen, auch für Mehrwertdienste, war bislang ausschließlich dem Betreiber eines öffentlichen Telekommunikationsnetzes vorbehalten. Durch die erfindungsgemäße Einrichtung kann ein Dritter in Absprache mit dem Betreiber eines Netzes einen Dienst anbieten und auch die Berechnung des Dienstes durchführen. Die Rückvermittlungseinrichtung kann dabei in Absprache mit dem Betreiber außerhalb oder innerhalb des Betriebsbereichs des Netzbetreibers installiert sein. Der Dritte kann selbst Mehrwertdienste anbieten oder seine Einrichtung hierfür zur Verfügung stellen.

Der Betreiber eines Netzes kann auch der Anbieter des Mehrwertdienstes sein, d.h. die dienstanbietende Funktion in seinem Netz selbst anbieten. In diesem Fall ist ein Dritter nicht beteiligt. Die Erfindung schafft für den Netzbetreiber zunächst den Vorteil, die gesetzlich vorgegebene Informationspflicht mit vergleichsweise geringen Investitionen realisieren zu können; die Gebühren-Sprachansage erfolgt durch die Rückvermittlungseinrichtung. Es entfällt die Neukonfiguration von Vermittlungsrechnern. Als Netzbetreiber zieht er Nutzen aus der Bereitstellung der Netzinfrastruktur und aus dem Mehrwertdienst selbst. Es liegt in seiner Hand die Rückvermittlungseinrichtungen flexibel an das zu erwartende Verkehrsaufkommen anzupassen. Betrieb und Wartung erfolgt im üblichen Rahmen zusammen mit den Einrichtungen des Netzes.

Bevorzugt erfolgt die Verbindungsherstellung in drei Schritten:

In einem ersten Schritt wird durch die Adressierung eines Mehrwertdienstes ein Verbindungsaufbau zwischen dem dienstanfordernden Teilnehmer und der Rückvermittlungseinrichtung initiiert und eine erste Nutzkanalverbindung hergestellt. Mit Vorteil übermittelt unmittelbar nach dem Herstellen dieser ersten Nutzkanalverbindung die Rückvermittlungseinrichtung an den rufenden Teilnehmer eine audielle Nachricht, welche dem rufenden Teilnehmer es ermöglicht eine Kalkulation des Mehrwertdienstes durchzuführen. Die Nachricht kann beispielsweise eine gebührenfreie Ansage über die Höhe des pro Zeiteinheit anfallenden Entgelts sein. Der Anrufer wird dadurch in die Lage versetzt, eine Entscheidung zu treffen: Er kann dem Netz gegenüber kund tun, dass er die Mehrwertdienstleistung auch nach Kenntnisnahme der Höhe des Entgeltes haben möchte. In diesem Fall legt er nicht auf, d.h. er hält seine aktuelle Adressierung aufrecht. Er kann aber auch die Verbindung zum Netz jederzeit abbrechen, indem er auflegt. Er zeigt dadurch an, dass er die Mehrwertdienstleistung nicht oder nicht mehr wünscht. Erfolgt das Auflegen während der Ansage, so darf ihm vom Netzbetreiber kein Entgelt in Rechnung gestellt werden.

In einem zweiten Schritt erfolgt ein Verbindungsaufbau zwischen der Rückvermittlungseinrichtung und der dienstanbietenden Funktion, um zwischen diesen eine zweite Nutzkanalverbindung herzustellen. In diesem Schritt wird geprüft, ob die dienstanbietende Funktion für eine Nachrichtenübermittlung bereit ist. Mit Vorteil erfolgt diese Signalisierung während des Zeitintervalls t1-t0, oder danach, d.h. während oder nach der Sprachinformationsübertragung zum A-Teilnehmer.

In einem dritten Schritt wird die erste und die zweite Nutzkanalverbindung in der Rückvermittlungseinrichtung durchgeschaltet. Auf diese Weise wird ein Kommunikationskanal zwischen den Kommunikationspartner außerhalb des switch hergestellt. Die Nachrichtenübermittlung des Mehrwertdienstes kann nun ablaufen. Die Rückvermittlungseinrichtung enthält in Form einer Konkordanzliste in einem Speicher eine Zuordnung zwischen der Dienstkennzahl und der Rufnummer des jeweiligen Dienstanbieters. Diese Rufnummer wird aber nicht weiter gegeben, so dass weder der rufende noch der angerufene Teilnehmer Kenntnis über die Identität seines Kommunikationspartners erlangt.

Das dienstintegrierende digitale Telekommunikationsnetz ISDN ist in nahezu allen Industrieländern weit verbreitet. Mit Vorteil wird die erste Nutzkanalverbindung (NKV1) durch einen ersten ISDN Nutzkanal (ISDN B1- Kanal) und die zweite Nutzkanalverbindung (NKV2) durch einen zweiten ISDN-Nutzkanal (ISDN-B2-Kanal) gebildet und die Nachrichtenübermittlung über diese ISDN-B-Kanäle geführt. Dadurch kann über den einen ISDN-Kanal die Sprachinformation über die Höhe des Entgelts abgewickelt werden, während über den anderen ISDN-Kanal die Signalisierung zum B-Teilnehmer erfolgt.
Im Speicher der Rückvermittlungseinrichtung ist auch die jedem Mehrwertdienst zugeordnete Sprachinformation über die Höhe des Entgeltes abgelegt.

Von ganz besonderem Vorteil ist, wenn die Berechnung des Entgeltes erst nach Fertigstellung der Verbindung zwischen dem ersten und dem zweiten Nutzkanal erfolgt. Dadurch wird sichergestellt, dass nur dann dem dienstanfordernden Teilnehmer ein Entgelt in Rechnung gestellt wird, wenn er dies auch tatsächlich wünscht. Die Abrechnung erfolgt in an sich bekannter Weise anhand der Rufnummer des dienstanfordernden Teilnehmers. Sie kann zeit- oder entfernungsabhängig erfolgen; zeitanteilige Kosten können ermittelt werden.

### Kurzbeschreibung der Zeichnungen

Eine Ausführungsformen der Erfindung ist in den folgenden Zeichnungen erläutert. Es zeigen:
- Fig. 1: eine schematische Darstellung einer Anordnung der erfindungsgemäßen Einrichtung in einem Kommunikationsnetz;
- Fig. 2: einen Protokollablauf ohne Gebührenansage;
- Fig. 3: einen Protokollablauf mit zwischengeschalteter Gebührenansage;
- Fig. 4: einen Ablauf des Verfahrens zur Durchführung eines Mehrwertdienstes anhand einer schematischen Darstellung der erfindungsgemäßen Einrichtung;
- Fig. 5: eine Gesamtdarstellung des erfindungsgemäßen Signalisierungsablaufs.

### Ausführung der Erfindung

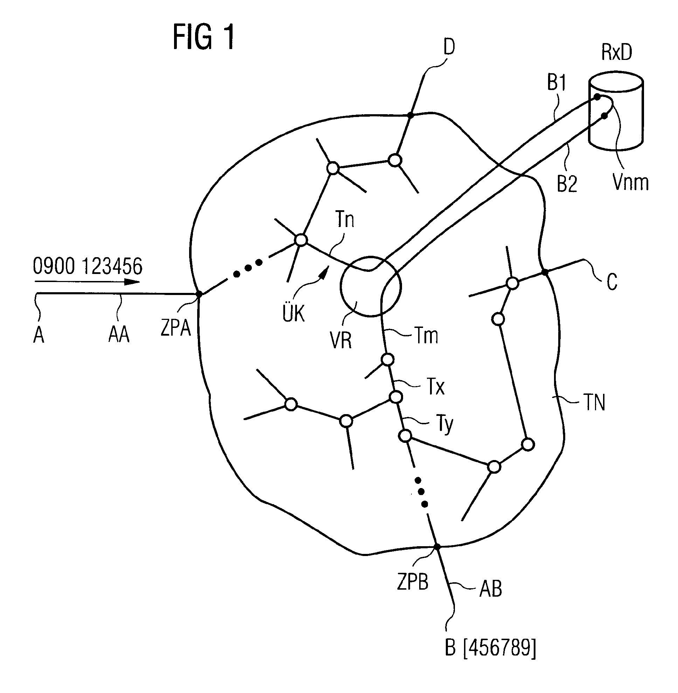

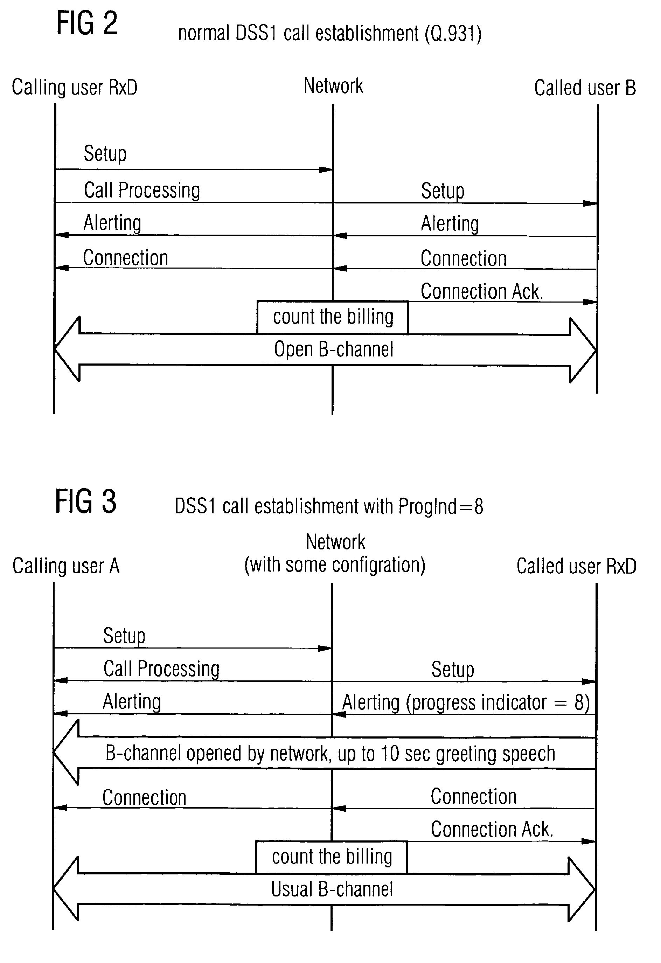

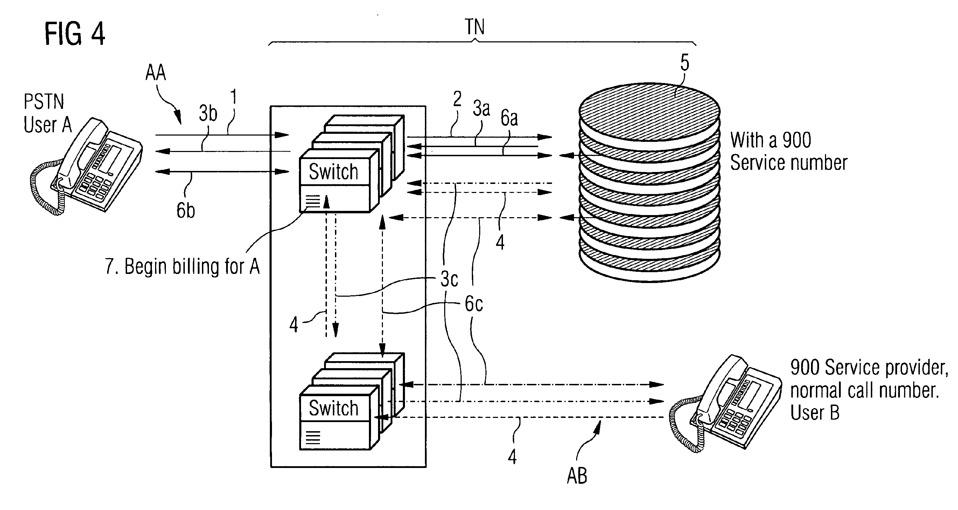

Fig. 1 zeigt in einer schematischen Darstellung eine Anordnung der erfindungsgemäßen Einrichtung in einem Kommunikationsnetz. Das Kommunikationsnetz TN ist ein Teilstreckennetz, das Übertragungswege für angeschlossene Kommunikationsteilnehmer A, B, C und D bereitstellt. In der Darstellung in Fig. 1 ist der Teilnehmer A der rufende Teilnehmer, d.h. jener der einen Mehrwertdienst in Anspruch nehmen möchte. Der Teilnehmer A ist in den Zeichnungen der Fig. 2 und Fig. 3 auch als "Calling user" und in Fig. 4 als "PSTN User A" gekennzeichnet. Er ist über eine Anschlussleitung AA mit einem Zugangspunkt ZPA des Telekommunikationsnetzes TN verbunden. Der Teilnehmer A ruft einen Mehrwertdienst aus dem Netz ab, indem er eine Adressierung tätigt und diese aktuell aufrecht hält. Er tut dies durch Wählen einer Nummer. Solange er den Hörer seines Endgerätes nicht auflegt, ist diese Adressierung aktuell. In Fig. 1 ist diese aktuelle Adressierung durch einen Pfeil mit der Bezeichnung 0900123456 dargestellt. Diese Adressierung enthält als Verbindungsziel den angesteuerten Dienst, nicht einen Teilnehmer. Das Netz erkennt, dass es sich nicht um eine Teilnehmernummer handelt und leitet die Adresse in bekannter Weise an einen speziellen Vermittlungsknoten VR weiter. Dieser Knoten VR realisiert die Verbindung zum Anbieter B des Mehrwertdienstes. Dieser B-Teilnehmer hat in Fig. 1 die Rufnummer 456789. Eine Anschlussleitung AB verbindet B mit einem Zugangspunkt ZPB des Netzes TN.

In der schematischen Darstellung der Fig. 1 sind Vermittlungsknoten durch Kreise gekennzeichnet. Bei der Herstellung eines Übertragungsweges treffen die Vermittlungsknoten eine Auswahl aus angrenzenden Teilstrecken und verbinden diese Teilstrecken. Sie führen dadurch eine Wegwahl (Routing) im Netz durch. Beim Abruf des Mehrwertdienstes erfolgt die Nachrichtenübermittlung zwischen den Teilnehmern über einen Übertragungskanal ÜK, der in Fig. 1 in einem Abschnitt vereinfacht dargestellt ist. Der Übertragungsweg ist in der Zeichnung der Fig. 1 durch Fettdruck hervorgehoben. Punkte im Übertragungsweg deuten weitere Vermittlungsknoten (Kreise) an. In der Zeichnung der Fig. 1 sind aneinandergereihte Teilstrecken durch die Bezugszeichen Tn, Tm, Tx, Ty gekennzeichnet. Der Vermittlungsrechner VR ist durch eine vergrößerte Darstellung eines Kreises in der Zeichnung hervorgehoben. Gemäß der Erfindung stellt er die Verbindung der angrenzenden Teilstrecken Tn und Tm nicht selbst her, sondern diese Verbindung erfolgt in einer angeschlossenen Rückvermittlungseinrichtung RxD. An dieser Stelle des Netzes unterscheidet sich also der Verbindungsaufbau vom Verbindungsaufbau im übrigen Netz: es wird ein Dienst erkannt und gegebenenfalls nach Übermittlung einer Gebührenansage die Nutzkanalverbindung in RxD durchgeschaltet.
Wie in der schematischen Darstellung in Fig. 1 hervorgehoben, ist die Rückvermittlungseinrichtung RxD über zwei ISDN-Kanäle, B1 und B2, mit dem Vermittlungsrechner VR verbunden. Über den Kanal B1 wird der Teilnehmer A über bevorstehende Kosten informiert.
Über den Kanal B2 wird zunächst eine Verbindung mit dem dienstanbietenden Teilnehmer B gesucht. Dies erfolgt anhand der B-Teilnehmerrufnummer 456789. In der Rückvermittlungseinrichtung ist in einem Speicher in Form einer Konkordanzliste Mehrwertdienst, Rufnummer und Kostenansage gespeichert. Aus der Zuordnung zwischen Dienstund Teilnehmerrufnummer initiiert die Rückvermittlungseinrichtung RxD, ggf. unter Zwischenschaltung weiterer Vermittlungsrechner, diesen Verbindungsaufbau zum B-Teilnehmer.
Wenn der B-Teilnehmer seine Bereitschaft für den Abruf des Mehrwertdienstes der Rückvermittlungseinrichtung signalisiert hat, stellt die Rückvermittlungseinrichtung RxD die Verbindung zwischen den Kommunikationspartnern A und B her, indem sie die Kanäle B1 und B2 mittels der Verbindung Vnm durchschaltet.
Sowohl der Verbindungsaufbau als auch die Nachrichtenübermittlung erfolgt über die Rückvermittlungseinrichtung RxD.

Die Rückvermittlungseinrichtung RxD kann sich in örtlicher Nähe zu einem Vermittlungsrechner befinden und Bestandteil der Netzinfrastruktur sein. Die Rückvermittlungseinrichtung RxD kann sich aber auch, - dies ist im Beispiel von Fig. 1 dargestellt - außerhalb des Netzes TN befinden und von einem Dritten, der nicht Betreiber eines Netzes zu sein braucht, betrieben werden.

Wie oben dargestellt ist die Rückvermittlungseinrichtung RxD mit dem Vermittlungsknoten VR durch einen ISDN-B1-Kanal und durch einen ISDN-B2 Kanal verbunden. Der ISDN-Protokollablauf ist in ITU-Empfehlungen festgelegt. Grundlage ist die Digital Signalling System One (DSS1) wie es im wesentlichen durch die ITU-Empfehlungen 1.431, Q.921 und Q.931 vorgegeben wird.

Fig. 3 stellt vereinfacht den Protokollablauf zwischen dem A-Teilnehmer ("calling user") und der Rückvermittlungseinrichtung RxD mit zwischengeschalteter Gebührenansage dar. Durch das Abheben des Handapparates durch den "calling user" wird dem Netz die Belegung durch eine SETUP-Nachricht signalisiert. Das Netz leitet diese SETUP-Nachricht an die Rückvermittlungseinrichtung RxD weiter, die sich in dieser Phase des Verbindungsaufbaus wie ein "called user" verhält. Ist die Einrichtung RxD in der Lage den Ruf anzunehmen, signalisiert sie dies gegenüber dem Netz durch die ALERT-Nachricht (in Fig. 3 Progress mit Parameter Progress Indicator Nr.8). Das Netz leitet die ALERT-Nachricht an den A-Teilnehmer. Nun wird im Netz eine Nutzkanalverbindung von der Rückvermittlungseinrichtung RxD zum A-Teilnehmer geöffnet und die Sprachinformation über die Entgelthöhe übertragen (Fig. 3 "10 sec greeting speech"). Durch CONNect ("connection" in Fig. 3) signalisiert die RxD Einrichtung gegenüber dem Netz, dass der Ruf angenommen wurde; das Netz leitet diese Information an den A-Teilnehmer und zeigt gegenüber diesem an, dass eine Nutzverbindung zustande kam.

Fig. 2 zeigt die an sich bekannte DSS1 Signalisierung für den Verbindungsaufbau von der Rückvermittlungseinrichtung RxD zu Teilnehmer B.

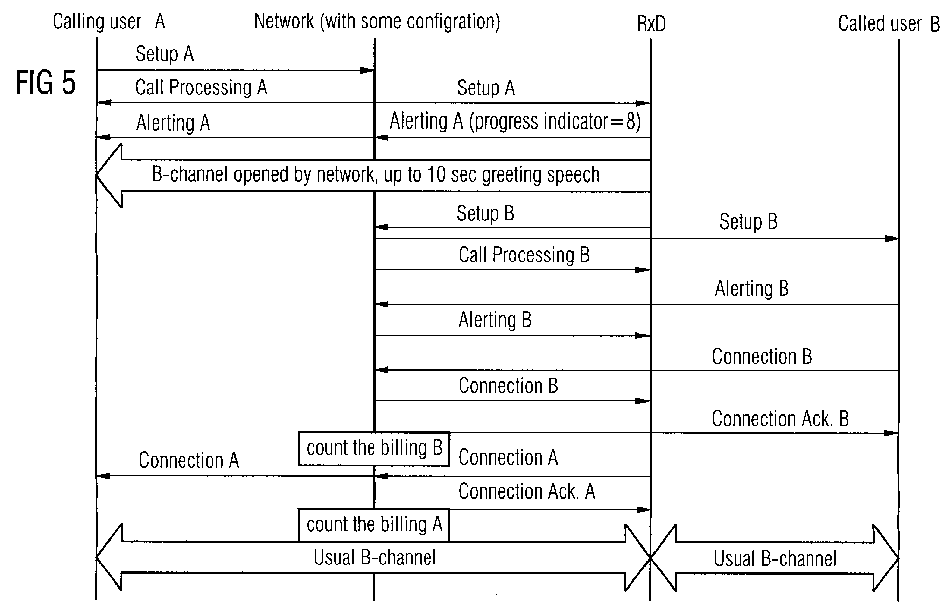

Fig. 5 zeigt in einer Gesamtdarstellung den erfindungsgemäßen Signalisierungsablauf beim Abruf eines Mehrwertdienstes aus einem digitalen Telekommunikationsnetz. Gemäß einer bevorzugten Ausführungsform der Erfindung kann das Signal "Connection Ack. B" auch nach dem Signal "Connection Ack. A" ausgesendet werden.

In Fig. 4 ist der Ablauf des erfindungsgemäßen Verfahrens anhand einer schematischen Darstellung gezeigt. Die zeitliche Reihenfolge der Verfahrensschritte ist durch Ziffern gekennzeichnet. Im folgenden wir der Ablauf des Verfahrens beschrieben; die Ziffern der Verfahrensschritt sind im Text in Klammern gesetzt. Der Kommunikationspartner A, User A in Fig. 4, ist Teilnehmer eines Telekommunikationsnetzes TN, beispielsweise eines öffentlichen Telefonnetzes PSTN (Public Switched Telephone Network, an das er durch die Anschlussleitung AA angeschlossen ist. Er fordert aus dem Netz TN einen Mehrwertdienst durch Adressierung an (1). Da es sich bei dieser Adressierung um die Adressierung eines Dienstes und nicht eines Teilnehmers handelt, gelangt diese Adressierung zu einer Vermittlungseinrichtung. In Fig. 4 ist diese Vermittlungseinrichtung als "switch" bezeichnet, der an eine Zusatzeinrichtung, die Rückvermittlungseinrichtung RxD angeschlossen ist. Der switch leitet die Adressierung an RxD weiter (2). In RxD sind die 900-er Servicenummern gespeichert. Die Einrichtung RxD verfügt außerdem über Steuerfunktionen, zur Signalisierung eines Verbindungsaufbaus in einem ISDN-Netz; RxD ist in der Lage die Funktion Alert mit Progress Indicator Nr. 8 zu empfangen und auszusenden, von RxD an den swith (3a) und vom switch weiter an den A-Teilnehmer (3b). Das Netz öffnet gebührenfrei eine ersten ISDN-B-Kanal zum A-Teilnehmer. In Fig. 4 ist dieser erste Kanal durch die Verbindungspfeile (6a und 6b) gekennzeichnet. Während eines Zeitintervalls, t1-t0, das nicht länger als 10 Sekunden ist, übermittelt die Rückvermittlungseinrichtung RxD dem dienstanfordernden A-Teilnehmer durch diesen ersten Kanal eine Ansage in der sie die Höhe des zu erwartenden Entgelts mitteilt. Der Teilnehmer A kann nun entscheiden, ob er den Mehrwertdienst zu den mitgeteilten Konditionen haben möchte oder nicht. Legt der Teilnehmer A während dieser Zeit auf und bringt dadurch gegenüber dem Netz zum Ausdruck, dass er den Dienst nicht in Anspruch nehmen möchte, entstehen ihm hierfür keine Kosten.
Aus der Adressierung erkennt die Rückvermittlungseinrichtung RxD denjenigen Teilnehmer, der die Mehrwertdienstleistung anbietet. Während der Ansage oder spätestens nach Ablauf des Zeitintervalls initiiert die Rückvermittlungseinrichtung RxD den Verbindungsaufbau mit diesem dienstanbietenden B-Teilnehmer, indem es eine SETUP-Nachricht an den B-Teilnehmer sendet (3c). Die Rufnummer des Teilnehmers B wird also an das Netz zurückgegebe. Im Schritt (4) signalisiert Teilnehmer B seine Bereitschaft für den Abruf des Mehrwertdienstes. Ein zweiter Kanal ist dadurch hergestellt. Die Rückvermittlungseinrichtung RxD stellt eine Verbindung (5) zwischen dem ersten und zweiten Kanal her, wodurch zwischen dem Teilnehmer A und dem Teilnehmer B eine Nutzkanalverbindung hergestellt ist (6c). Dieser Vermittlungsaufbau kommt einem re-exchange, einer Rückvermittlung, in das Netz gleich. Der mit der Rückvermittlungseinrichtung RxD verbundene switch beginnt mit der Gebührenberechnung (7). Das Entgelt wird dem Teilnehmer A vom Betreiber des Netzes in Rechnung gestellt.

In Fig. 4 ist in der Verbindung zum B-Teilnehmer ein weiterer switch dargestellt. Selbstverständlich kann der Übertragungsweg eine Vielzahl von Vermittlungsstellen umfassen.
Die Rückvermittlungseinrichtung kann selbstverständlich sowohl Hardware als auch Softwarekomponenten in unterschiedlichem Umfang umfassen. Der Fachmann kennt hierfür Mittel die zur Realisierung und Installation in einem Kommunikationsnetz erforderlich sind.

### Bezugszeichenliste

- TN: Kommunikationsnetz
- RxD: Rückvermittlungseinrichtung, re-exchange-device
- VR, C, D: Vermittlungsrechner, switch
- Tn: Teilstrecke n
- Tm: Teilstrecke m
- Tx: Teilstrecke x
- Ty: Teilstrecke y
- B1: ISDN-B1-Kanal
- Vnm: Verbindung Vnm
- A: dienstanfordernder, rufender Teilnehmer, A-Teilnehmer, calling user
- B: dienstanbietende Funktion oder Teilnehmer, B-Teilnehmer, called user
- AA: Anschlussleitung des Teilnehmers A
- AB: Anschlussleitung des Teilnehmers B
- ZPA: Zugangspunkt des Teilenehmers A
- ZPB: Zugangspunkt des Teilnehmers B
- NKV1: Nutzkanalverbindung 1
- NKV2: Nutzkanalverbindung 2

## Patentansprüche

1. Verfahren zur Durchführung eines frei kalkulierbaren Mehrwertdienstes, der durch eine aktuelle Adressierung für zumindest einen dienstanfordernden Teilnehmer (A) von einer dienstbereitstellenden Funktion (B) eines Kommunikationsnetzes durch Nachrichtenübermittlung in einem Übertragungskanal (ÜK) abrufbar ist, wobei der Übertragungskanal durch Verbinden aneinandergereihter Teilstrecken (Tn, Tm; Tx,Ty) gebildet wird und zumindest eine dieser Verbindungen (Vnm) in einer an einen Vermittlungsrechner (VR) angeschlossenen Rückvermittlungseinrichtung (RxD) hergestellt wird.

2. Verfahren nach Anspruch 1, **dadurch gekennzeichnet, dass** die Nachrichtenübermittlung über diese zumindest eine Verbindung (Vnm) der Rückvermittlungseinrichtung (RxD) erfolgt.

3. Verfahren nach Anspruch 1 oder 2, **dadurch gekennzeichnet, dass** die Bildung des Übertragungskanals (ÜK) in Abhängigkeit der aktuellen Adressierung in folgenden Schritten erfolgt:
a) Verbindungsaufbau zwischen dem dienstanfordernden Teilnehmer (A) und der Rückvermittlungseinrichtung (RxD) um eine erste Nutzkanalverbindung (NKV1) herzustellen;
b) Verbindungsaufbau zwischen der Rückvermittlungseinrichtung (RxD) und der dienstbereitstellenden Funktion (B) um eine zweite Nutzkanalverbindung (NKV2) herzustellen;
c) Herstellen des Übertragungskanals (ÜK)durch Herstellen einer Verbindung (Vnm) zwischen der ersten und der zweiten Nutzkanalverbindung (NKV1, NKV2) zum Zweck einer Nachrichtenübermittlung zwischen dem dienstanfordernden Teilnehmer (A) und der dienstbereitstellenden Funktion (B).

4. Verfahren nach Anspruch 3, **dadurch gekennzeichnet, dass** unmittelbar nach dem Herstellen der ersten Nutzkanalverbindung (NKV1) in einem ersten Zeitintervall (t1-t0) die Rückvermittlungseinrichtung (RxD) an den dienstanfordernden Teilnehmer (A) eine Sprachnachricht übermittelt, die eine Kalkulation des Mehrwertdienstes ermöglicht.

5. Verfahren nach Anspruch 4, **dadurch gekennzeichnet, dass** die Nachricht die Höhe des pro Zeiteinheit anfallenden Entgeltes für den Mehrwertdienst angibt.

6. Verfahren nach Anspruch 4 oder 5, **dadurch gekennzeichnet, dass** die Herstellung der zweiten Nutzkanalverbindung (NKV2) während oder nach Zeitintervall(t1-t0) beginnt.

7. Verfahren nach einem der Ansprüche 3 bis 6, **dadurch gekennzeichnet, dass** die erste Nutzkanalverbindung (NKV1) durch einen ersten ISDN Nutzkanal (B1- Kanal) und die zweite Nutzkanalverbindung (NKV2) durch einen zweiten ISDN-Nutzkanal (B2-Kanal) gebildet wird und die Nachrichtenübermittlung über diese ISDN-B-Kanäle (B1-Kanal, B2-Kanal) erfolgt.

8. Verfahren nach einem der Ansprüche 3 bis 7 **dadurch gekennzeichnet, dass** nach dem Herstellen der Verbindung (Vnm) der Vermittlungsrechner (VR) eine Berechnung eines Entgelts für die Nachrichtenübermittlung durchführt.

9. Einrichtung zur Durchführung eines Mehrwertdienstes der durch eine aktuelle Adressierung für zumindest einen dienstanfordernden Teilnehmer (A) von einer dienstbereitstellenden Funktion (B) eines Kommunikationsnetzes (TN) durch Nachrichtenübermittlung in einem Übertragungskanal (ÜK) abrufbar ist, wobei der Übertragungskanal durch Verbinden aneinandergereihter Teilstrecken (Tn, Tm; Tx, Ty) gebildet wird, **dadurch gekennzeichnet, dass** zumindest eine dieser Verbindungen (Vnm) durch eine an einen Vermittlungsrechner (VR) angeschlossene Rückvermittlungseinrichtung (RxD) verläuft.

10. Einrichtung nach Anspruch 9, **dadurch gekennzeichnet, dass** die Rückvermittlungseinrichtung (RxD) und der eine Vermittlungsrechner (VR) durch einen ISDN-Anschluss angeschlossen ist.

11. Einrichtung nach Anspruch 10, **dadurch gekennzeichnet, dass** der ISDN-Anschluss einen ersten und einen zweiten ISDN-B-Kanal (B1, B2) umfasst, die einen Nutzkanal für die Nachrichtenübertragung bilden.

12. Einrichtung nach Anspruch 11, **dadurch gekennzeichnet, dass** der erste und der zweite ISDN-Kanal jeweils ein Fortsetzung für die an den Verbindungsrechner (VR) angrenzenden Teilstrecken (Tn, Tm; Fig. 1) bildet und jede Fortsetzung durch die Verbindung (Vnm) in der Rückvermittlungseinrichtung (RxD) verbindbar ist.

13. Rückvermittlungseinrichtung(RxD) zur Durchführung eines Mehrwertdienstes, welche durch einen ISDN-Anschluß an einen Vermittlungsrechner eines Kommunikationsnetzes, in welchem der Mehrwertdienst für dienstanfordernde Teilenehmer durch eine Adresse von einer dienstanbietenden Funktion in einem Übertragungskanal abrufbar ist, anschließbar ist, umfassend:
• eine Speichereinheit, in welcher zumindest eine Adressierung eines Mehrwertdienstes speicherbar ist;
• eine Verbindungseinheit, durch welche ein Verbindung (Vnm) zwischen einem ISDN-B1 und ISDN-B2 Kanal des ISDN-Anschlusses herstellbar ist;
• eine Steuereinheit, durch welche aus der Adresse des Mehrwertdienstes ein Übertragungskanal herstellbar ist.

14. Rückvermittlungseinrichtung nach Anspruch 13, **dadurch gekennzeichnet**, das der Übertragungskanal über die Verbindung (Vnm) und den ISDN-B1 und B2 Kanal verläuft.
